## Europäisches Patentamt

## European Patent Office

## Office européen des brevets

(19)

(11) Veröffentlichungsnummer: **0 205 875
B1**

(12) **EUROPÄISCHE PATENTSCHRIFT**

(45) Veröffentlichungstag der Patentschrift:
**12.04.89**

(51) Int. Cl.⁴: **B23K 9/02, B23K 31/00**

(21) Anmeldenummer: **86106448.3**

(22) Anmeldetag: **13.05.86**

(54) Mechanisiertes Verfahren zum Schweissverbinden von dickwandigen Stutzen mit zylindrischen Behälterteilen.

(30) Priorität: **05.06.85 DE 3520161**

(43) Veröffentlichungstag der Anmeldung:
**30.12.86 Patentblatt 86/52**

(45) Bekanntmachung des Hinweises auf die Patenterteilung:
**12.04.89 Patentblatt 89/15**

(84) Benannte Vertragsstaaten:
**AT DE FR GB IT NL SE**

(56) Entgegenhaltungen:
**EP-A- 0 049 037
EP-A- 0 054 712**

**PATENT ABSTRACTS OF JAPAN, Band 7,
Nr. 261 (M-257)[1406], 19. November 1983**

(73) Patentinhaber: **MAN GUTEHOFFNUNGSHÜTTE GMBH,
Bahnhofstrasse, 66 Postfach 11 02 40,
D-4200 Oberhausen 11(DE)**

(72) Erfinder: **Momper, Arno, Dipl.-Ing., Alsfeldstrasse 109,
D-4200 Oberhausen 11(DE)**

**Beschreibung**

Die Erfindung betrifft ein mechanisiertes Engspaltschweißverfahren zum Schweißverbinden von dickwandigen Stutzen mit zylindrischen Behälterteilen, insbesondere von Hauptkühlmittelstutzen, mit dem Mantelflansch eines Reaktordruckbehälters.

Der Reaktordruckbehälter ist eine der wichtigsten Komponenten im Primärkreislauf von Kernenergieanlagen. Entsprechend seiner Funktion werden an den Druckbehälter besondere sicherheitstechnische Anforderungen gestellt. Diese erfordern die strenge Einhaltung optimaler Fertigungsbedingungen.

Die Hauptkühlmittelstutzen, die sich am Umfang des Mantelflansches der Reaktordruckbehälter befinden, werden üblicherweise mittels E-Handschweißung oder UP-Schweißung mit dem zylindrischen Behälterteil verbunden. Hierzu müssen sowohl der Stutzen als auch der Mantelflansch einer gewissenhaften Bearbeitung unterzogen werden, d.h. zum Einsetzen des Stutzens in den Mantelflansch und zur Schweißnahtvorbereitung müssen beide zu verschweißenden Flächen mechanisch bearbeitet werden. Die Schweißung zur Verbindung des in den Mantelflansch eingesetzten Stutzens geschieht auf konventionelle Weise von außen, während anschließend vom Inneren her eine Wurzelgegenschweißung vorgenommen wird.

Diese Art der Schweißverbindung weist Nachteile auf. Für die Schweißverbindung ist eine aufwendige mechanische Bearbeitung und beim Schweißen das Abfahren einer Sattelkurve notwendig. Infolge des großen, durch den Schweißvorgang auszufüllenden Nahtvolumens zwischen Stutzen und Behälter ist der Verbrauch an Schweißgut erheblich. Da die Durchstrahlbarkeit der Schweißverbindung, die aus sicherheitstechnischen Gründen vorgeschrieben wird, unbefriedigend ist, lassen sich Schweißfehler nicht mit der erforderlichen Genauigkeit erkennen.

Es ist auch bereits versucht worden, das UP-Engspaltschweißverfahren nach gleicher oder ähnlicher mechanischer Bearbeitung von Stutzen und Mantelflansch mit einseitiger Schweißung von außen oder beidseitiger Schweißung, d.h. von außen und innen, anzuwenden. Nachteile sind auch hierbei die aufwendigen Nahtvorbereitungen, die z.T. schwierige Wurzelausarbeitung, der relativ hohe Verbrauch an Schweißgut zum Ausfüllen des Nahtvolumens und nicht zuletzt die z.T. schlechte Erkennbarkeit von Schweißfehlern bei der Durchstrahlung der Schweißverbindung.

In der EP-A1 0 049 037 wird beispielsweise beschrieben, wie Stutzen auf dickwandige Rohre mittels Engspaltschweißung aufgeschweißt werden. Die horizontale Schweißung nach Fig. 4 dieser Schrift erfolgt in der Weise, daß die Schweißlagen konzentrisch zur Stutzenachse verlaufen.

Aufgabe der Erfindung ist es daher, ein Verfahren vorzustellen, mit dem es gelingt, eine Schweißverbindung von Stutzen mit einem zylindrischen Behälterteil herzustellen, die keiner aufwendigen Nahtvorbereitung bedarf, bei der man mit einem Minimum an Schweißgut auskommt und die eine bessere Durchstrahlungsprüfung ermöglicht.

Diese Aufgabe wird erfindungsgemäß in der Weise gelöst, wie es in den Patentansprüchen angegeben ist.

Bei dem erfindungsgemäßen Schweißverbindungs-Verfahren ist zur Vorbereitung der Schweißung lediglich die mechanische Bearbeitung des anzuschweißenden Stutzens in der Weise erforderlich, daß diesem eine zur zylindrischen Mantelflanschoberfläche parallele Anschlußfläche gegeben wird. Der Mantelflansch des Behälterteils erfordert hingegen keine Bearbeitung der Anschlußfläche. Beim Schweißvorgang muß kein Sattelkurve abgefahren werden. Die Stutzenschweißung erfolgt im Gegensatz zum Stand der Technik konzentrisch zur Behälterachse.

Die Ersparnis an Schweißgut zum Ausfüllen des Nahtvolumens beträgt bei Anwendung des erfindungsgemäßen Verfahrens 30 bis 60% gegenüber dem bei Anwendung der Verfahren des Standes der Technik benötigten Schweißmaterial.

Die Durchstrahlbarkeit der Schweißverbindungen zur Fehlerkontrolle ist einfach und sicher. Es ist in diesem Fall eine Zentralaufnahme möglich.

Ein besonderer Vorteil ergibt sich, wenn man nach einem weiteren Merkmal des erfindungsgemäßen Verfahrens gleichzeitig mehrere Stutzen am Umfang eines Behälterteils anschweißt. Dies bedeutet eine erhebliche Kürzung des Zeitaufwandes. Hierzu wird entweder das Behälterteil mit senkrecht stehender Behälterachse auf einen Drehtisch gestellt und werden am Behälterumfang entsprechend der Stutzenanzahl stationäre Schweißeinrichtungen angeordnet, oder es werden um das stationäre Behälterteil an dessen Umfang hin und her bewegbare Schweißeinrichtungen angeordnet.

Zur Schweißbadsicherung kann in der Horizontalen des Engspaltes eine stegartige Schweißbadsicherung aufgepuffert werden. Oberhalb der Schweißbadsicherung findet sodann der Engspaltschweißvorgang mit horizontalen Schweißraupen statt. Es kann zweckmäßig sein, zur Vermeidung von Gefügespannungen die Schweißverbindung von Stutzen mit zylindrischem Mantelflansch in mehreren Verfahrensschritten, d.h. segmentweise, durchzuführen.

Das erfindungsgemäße Verfahren ist, obwohl es sich für die entsprechende Schweißverbindung beim Reaktordruckbehälter besonders anbietet, auch zum Schweißverbinden von Stutzen mit zylindrischen Behälterteilen, d.h. Apparaten, die nicht für nukleare Zwecke eingesetzt werden, anwendbar.

Als Schweißeinrichtung hat sich die Einrichtung nach der EP-A1 0 054 712, die aus den Bauteilen Schweißschwert, Schwenkeinheit und Drahtrichtwerk besteht, bewährt. Das gekühlte Schweißschwert, das sich aus einem stromlosen und einem stromführenden Teil zusammensetzt, ragt in die Engspaltfuge hinein und wird mit Hilfe der Schwenkeinrichtung genau positioniert und geführt.

Die schematische Zeichnung, die die Erläuterung gegenständlich unterstützen soll, zeigt

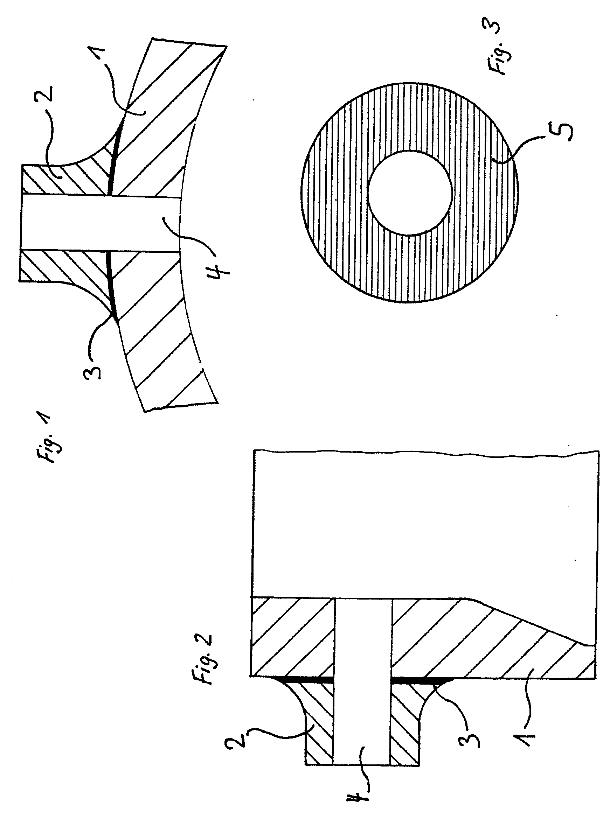

in Fig. 1 einen zur Behälterachse senkrechten Ausschnitt des Stutzenbereiches,

in Fig. 2 einen zur Behälterachse parallelen Ausschnitt und

in Fig. 3 eine zur Stutzenachse senkrechte Draufsicht des Nahtaufbaus.

In den Patentfiguren ist mit 1 ausschnittsweise der Mantelflansch eines Behälters, beispielsweise Reaktordruckbehälters, bezeichnet.

In Umfangsrichtung sind an Reaktordruckbehältern dieser Art beispielsweise acht Stutzen für die Hauptkühlmittelleitungen angeordnet.

Die Patentfiguren zeigen einen mit Hilfe des anmeldungsgemäßen Verfahrens an den Mantelflansch 1 angeschweißten Stutzen 2. Die Engspaltschweißnaht ist mit 3 bezeichnet und die Bohrung von Stutzen und Mantelflansch mit 4. Die einzelnen in Behälterumfangsrichtung verlaufenden Schweißlagen sind mit 5 bezeichnet.

Die einzelnen Schweißlagen der Engspaltnaht können beispielsweise mit der Zwei-Raupen-Technik hergestellt werden, d.h. jede Schweißlage besteht aus einer an der Behälterseite liegenden und einer auf der Stutzenseite liegenden Schweißraupe.

In Abhängigkeit von den Bauteilabmessungen kann zur Ausführung der Engspaltschweißung das UP-Dünndraht- oder das UP-Dickdraht-Schweißverfahren bzw. das Schutzgasschweißen mit abschmelzender (MIG-, MAG-Verfahren) oder mit nicht abschmelzender Elektrode (WIG-, TIG-Verfahren) erfolgen.

## Patentansprüche

1. Mechanisiertes Engspaltschweißverfahren zum Schweißverbinden von dickwandigen Stutzen (2) mit zylindrischen Behälterteilen (1), insbesondere von Hauptkühlmittelstützen, mit dem Mantelflansch eines Reaktordruckbehälters, dadurch gekennzeichnet, daß die sattelförmige Anschlußfläche des Stutzens (2) mit dem zylindrischen Behälterteil (1) in Behälterumfangsrichtung verbunden wird, indem in dieser Fläche, bei senkrecht stehender Behälterachse, eine zur Behälterwand parallel verlaufende Engspaltschweißung mittels UP- oder Schutzgasschweißung mit horizontalen Schweißraupen durchgeführt wird, wobei die einzelnen Schweißlagen in Behälterumfangsrichtung verlaufen.

2. Mechanisiertes Engspaltschweißverfahren zum Schweißverbinden nach Anspruch 1, dadurch gekennzeichnet, daß zum gleichzeitigen Schweißverbinden von mehreren Stutzen mit dem zylindrischen Behälterteil der senkrecht stehende Behälterteil auf einem Drehtisch gelagert ist.

3. Mechanisiertes Engspaltschweißverfahren zum Schweißverbinden nach Anspruch 1, dadurch gekennzeichnet, daß zum gleichzeitigen Schweißverbinden von mehreren Stutzen mit dem zylindrischen Behälterteil die Schweißeinrichtungen in Umfangsrichtung des Behälterteils hin und her verfahrbar sind.

4. Mechanisiertes Engspaltschweißverfahren zum Schweißverbinden nach den Ansprüchen 1 bis 3, dadurch gekennzeichnet, daß vor dem Schweißverbinden von Stutzen mit Behälterteil eine Schweißbadsicherung aufgepuffert wird.

## Claims

1. Mechanised narrow-gap welding process for joining thick-walled connection pieces (2) to cylindrical container parts (1), particularly for joining main coolant connectors to the casing flange of a reactor pressure vessel, by welding, characterised in that the saddle-shaped connecting surface of the connection piece (2) is connected to the cylindrical container part (1) in the peripheral direction of the container in that in this surface, when the container axis is vertical, a narrow-gap weld which extends parallel with the container wall is performed by means of submerged-arc welding or barrier gas welding with horizontal weld beads, the individual weld layers extending in the peripheral direction of the container.

2. Mechanised narrow-gap welding process for connecting by welding, as claimed in Claim 1, characterised in that for the simultaneous welding of a plurality of connection pieces to the cylindrical container part, the vertically positioned container part is mounted on a turntable.

3. Mechanised narrow-gap welding process for connecting by welding, as claimed in Claim 1, characterised in that for the simultaneous welding of a plurality of connection pieces to the cylindrical container part for welding means can be reciprocated in the peripheral direction of the container part.

4. Mechanised narrow-gap welding process for connecting by welding, as claimed in Claims 1 to 3, characterised in that before connection pieces are joined to a container part by welding a welding bath protective cushioning arrangement is prepared.

## Revendications

1. Procédé mécanisé de soudage à fentes étroites pour l'assemblage par soudage d'une tubulure (2) à paroi épaisse avec des parties cylindriques de récipient (1), notamment de tubulures de fluide de refroidissement principales avec la bride enveloppe d'un récipient sous pression de réacteur, procédé caractérisé en ce que la surface de raccordement en forme de selle de la tubulure (2) est assemblée avec la partie cylindrique du récipient (1) en direction périphérique de récipient, du fait que dans cette surface, alors que l'axe du récipient est vertical, un soudage à fentes étroites, s'étendant parallèlement à la paroi du récipient, est effectué avec des chenilles de soudure horizontales par soudure sous flux solide ou bien sous gaz de protection, les différentes passes de soudure s'étendant en direction périphérique du récipient.

2. Procédé mécanisé de soudage à fentes étroites, pour l'assemblage par soudage selon la revendication 1, caractérisé en ce que pour l'assemblage simultané par soudage de plusieurs tubulures avec la partie cylindrique du récipient, cette partie placée verticalement du récipient est montée sur une table tournante.

3. Procédé mécanisé de soudage à fentes étroites pour l'assemblage par soudage selon la revendication 1, caractérisé en ce que pour l'assemblage simultané par soudage de plusieurs tubulures avec la partie cylindrique du récipient, les dispositifs de soudage sont susceptibles d'être déplacés d'un mouvement d'aller et retour dans la direction périphérique de cette partie du récipient.

4. Procédé mécanisé de soudage à fentes étroites pour l'assemblage par soudage selon les revendications 1 à 3, caractérisé en ce que, avant l'assemblage par soudage de tubulures avec la partie du récipient, une sécurité pour le bain de soudure est placée en tampon.

Fig. 1

Fig. 2

Fig. 3